# EUROPÄISCHE PATENTSCHRIFT

(11) **EP 0 671 474 B1**
(45) Veröffentlichungstag und Bekanntmachung des Hinweises auf die Patenterteilung: **07.11.2001**
(21) Anmeldenummer: 95890044.1
(22) Anmeldetag: 02.03.1995
(51) Int. Cl.: C21B 13/00, B65G 53/36

(54) **Verfahren zum Chargieren von Erz**
Method of charging ore
Procédé pour le chargement du minerai

(30) Priorität: 04.03.1994 AT 46594
(43) Veröffentlichungstag der Anmeldung: 13.09.1995
(73) Patentinhaber: VOEST-ALPINE INDUSTRIEANLAGENBAU GESELLSCHAFT m.b.H., A-4020 Linz (AT); Brifer International Ltd., Bridgetown, Barbados (BB)
(72) Erfinder: Czermak, Karl, Dipl.-Ing., A-4470 Enns (AT); Milionis, Konstantin, Dipl.-Ing., A-8413 St. Georgen a/d Stiefling 122 (AT); Tessmer, Gero, A-4040 Linz (AT); Whipp, Roy Hubert, Jr., Miami, Fl. 33176 (US)
(74) Vertreter: Kopecky, Helmut, Dipl.-Ing.

(56) Entgegenhaltungen:
- EP-A- 0 027 909
- EP-A- 0 629 708
- DE-A- 3 201 608
- US-A- 4 207 093

## Beschreibung

Die Erfindung betrifft ein Verfahren zum Chargieren von feinkörnigem Erz, insbesondere Eisenerz, in einen von Prozeßgas durchströmten Reaktordruckbehälter, wobei das Erz zunächst in ein Förderdruckgefäß eingebracht, in diesem mittels eines Druckgases unter Druck gesetzt und anschließend über eine Förderleitung mittels des Druckgases in den Reaktordruckbehälter gefördert wird, sowie eine Anlage zur Durchführung des Verfahrens.

Die Direkt-Reduktion von feinkörnigen Eisenerzen wird in Reaktordruckbehältem mit einem so weit wie möglich geschlossenen Reduktionsgaskreislauf bei Temperaturen von 500°C bis 850°C und Drücken von 1 bis 20 bar durchgeführt.

Zum Chargieren von feinkörnigem Eisenerz in einen Reaktordruckbehälter ist es bekannt (US-A - 5,082,251), ein Druckschleusensystem vorzusehen. Hierbei wird das Feinerz zunächst in einen Druckbehälter gefüllt, der nach Schließen der Fülleitung zum Reaktordruckbehälter auf den Druck des Druckreaktors gebracht wird. Danach wird die Auslaßleitung zum Reaktordruckbehälter geöffnet und das Feinerz fließt mittels Schwerkraft in den Reaktordruckbehälter. Dieser Eintrag kann sowohl bei Umgebungstemperatur als auch bei erhöhten Temperaturen erfolgen. Die räumliche Anordnung dieser Druckschleusensysteme kann wegen der Schwerkraftausnützung nur über den Druckreaktoren sein. Dies bedingt eine große Bauhöhe des gesamten Systems und damit einen hohen bautechnischen Aufwand sowie aufwendige Förderanlagen.

Aus der US-A - 4,207,093 ist es bekannt, zum Reduzieren von Metalloxiden die Metalloxide nach Austritt aus einem Vorratsbunker mittels eines Druckgases und mit Hilfe einer Venturi-Einrichtung durch eine "heated coil" innerhalb eines Ofens zu leiten, in dem die Reduktion stattfindet. Das reduzierte Metalloxid wird in einen Zyklon mit Hilfe des Druckgases weitergeleitet, das abgeschiedene Druckgas wird einer CO₂- und H₂O-Eliminierung unterzogen und anschließend wiederum gemeinsam mit frischem Reduktionsgas für die Förderung der Metalloxide von einem Auslaß des Vorratsbehälters zur "heated coil" verwendet. Gemäß einer Variante sind statt der "heated coil" Zyklone vorgesehen.

Aus Journal of Metals, April 1957, Seiten 586 bis 590, "The H-Iron Process", ist ein Verfahren der eingangs beschriebenen Art bekannt, bei dem heißes Feinerz pneumatisch in ein Förderdruckgefäß über einen Sammelbehälter eingebracht wird. Sobald das Förderdruckgefäß gefüllt ist, wird es mittels Wasserstoffgas, das in diesem Fall als Prozeßgas für die Reduktion des Eisenerzes dient, unter Druck gesetzt, worauf die Förderleitung zwischen dem Förderdruckgefäß und dem Reaktordruckbehälter geöffnet wird. Das Feinerz strömt hierdurch innerhalb kurzer Zeit in den Reaktordruckbehälter. Eine solche diskontinuierliche Chargierung ist dem Reduktionsprozeß abträglich. Es ergeben sich ungleichmäßige Qualitäten sowie eine ungleichmäßige Belastung bei ungünstiger Ausnützung des Reaktordruckbehälters.

Die Erfindung bezweckt die Vermeidung dieser Nachteile und Schwierigkeiten und stellt sich die Aufgabe, ein Verfahren der eingangs beschriebenen Art sowie eine Anlage zur Durchführung des Verfahrens zu schaffen, welche einen störungsfreien Ablauf der im Reaktordruckbehälter ablaufenden Reduktion bei optimaler Ausnutzung der Kapazität des Reaktordruckbehälters und unter möglichster Einsparung an Druckgas und durch den Reaktordruckbehälter zu bewegender Gasmenge ermöglichen.

Diese Aufgabe wird erfindungsgemäß dadurch gelöst, daß ein Teil des Erzes in mindestens ein weiteres Förderdruckgefäß eingebracht und in diesem ebenfalls mittels eines Druckgases unter Druck gesetzt wird, und daß die Chargierung des Erzes in den Reaktordruckbehälter kontinuierlich erfolgt, u.zw. durch alternierende Förderung einmal aus dem einen und anschließend aus dem weiteren Förderdruckgefäß, wobei das Druckgas als mengenmäßiger oder bestandteilmäßiger Teil des Prozeßgases diesem entnommen und mit dem Erz diesem wieder zugeführt wird.

Durch die erfindungsgemäß bessere Ausnützung der Reaktoren läßt sich deren Durchsatzleistung beträchtlich erhöhen. Zudem ist die Betriebsweise eines erfindungsgemäß kontinuierlich chargierten Reaktordruckbehälters wesentlich vereinfacht, da die beim diskontinuierlichen Betrieb erforderlichen Schaltungen entbehrlich werden. Insgesamt ergibt sich somit neben einer beträchtlichen Verfahrensvereinfachung ein großer wirtschaftlicher Vorteil.

Aus der EP-A - 0 027 909 ist eine Anlage zum kontinuierlichen Fördern von feinkörnigem Gut, wie Kohlestaub bekannt, die zwei alternierend pneumatisch zu füllende und zu leerende Druckgefäße aufweist, von denen das zu fördernde Gut dem Verbraucher kontinuierlich mit Hilfe von Druckluft zugeführt wird. Die hierbei verwendete Druckluft ist Umgebungsluft, die über einen Kompressor den das zu fördernde Gut fördernden Förderleitungen und damit dem Kohlestaubverbraucher zugeführt wird.

Eine weitere Verfahrensvereinfachung läßt sich erfindungsgemäß dadurch erzielen, daß das Prozeßgas zumindest teilweise unter Einschluß des Reaktordruckbehälters in einem Kreislauf geführt ist.

Vorteilhaft wird als Druckgas CO₂ verwendet, welches dem Prozeßgas des im Reaktordruckbehälter stattfindenden Prozesses mittels einer CO₂-Wäsche entnommen wird. Der Vorteil von CO₂ als Transportgas liegt vor allem darin, daß es nicht brennbar ist und den Prozeßablauf im Reaktordruckbehälter nicht stört oder beeinflußt. Zudem kann es wieder abgeschieden werden und bleibt somit verfügbar.

Zweckmäßig kann auch ein zur Reduktion des Erzes dienendes Reduktionsgas als Druckgas zur Förderung des Erzes aus den Förderdruckgefäßen in den Reaktordruckbehälter verwendet werden.

Vorteilhaft wird das Druckgas auf einen Druck von bis zu 20 bar vorgespannt und unter Ausgleich vorhandener Druckschwankungen in die Förderdruckgefäße eingeleitet.

Zur exakten Erfassung der Fördermenge werden vorteilhaft die Förderdruckgefäße kontinuierlich gewogen und wird die alternative Förderung aus einem Förderdruckgefäß bzw. die Füllung eines Förderdruckgefäßes über einen Regelkreis in Abhängigkeit des gemessenen Gewichtes der Förderdruckgefäße vorgenommen, wobei der Regelbereich auf den jeweils vorgesehenen Anwendungsbereich abgestimmt wird.

Eine Anlage zur Durchführung des erfindungsgemäßen Verfahrens mit einem Trockner und Vorwärmer für das Erz, einem diesem über eine Erzzuführleitung nachgeordneten Förderdruckgefäß, in das eine Druckgasleitung mündet, von dem eine Förderleitung ausgeht und in den Reaktordruckbehälter mündet, ist dadurch gekennzeichnet, daß mindestens ein weiteres Förderdruckgefäß vorhanden ist, wobei die Erzzuführleitung mittels Absperrorgane alternativ mit dem einen oder mit dem weiteren Förderdruckgefäß in leitungsmäßige Verbindung bringbar ist, daß jedes der Förderdruckgefäße mit einer Förderleitung mit dem Reaktordruckbehälter in Verbindung bringbar ist und daß eine Druckgasleitung alternativ mit jedem der Förderdruckgefäße mittels Absperrorgane in leitungsmäßige Verbindung bringbar ist, wobei die Druckgasleitung mit dem Reaktordruckbehälter über die Förderdruckgefäße und die Förderleitungen einen Kreislauf bildend in leitungsmäßiger Verbindung steht.

Vorteilhaft ist die Druckgasleitung zusätzlich mittels Absperrorgane alternativ mit jeder der von den Förderdruckgefäßen in den Reaktordruckbehälter rührenden Förderleitungen in leitungsmäßige Verbindung bringbar.

Zur Sicherstellung einer gleichmäßigen Förderung ist zweckmäßig in der Druckgasleitung ein Verdichter und ein Druckschwankungen ausgleichender Ausgleichsbehälter vorgesehen.

Zur Erfassung der Fördermenge des Erzes sind gemäß einer bevorzugten Ausführungsform die Förderdruckgefäße mit einer Wiegeeinrichtung versehen und stehen in der Druckgasleitung vorhandene sowie in der Erzzuführleitung vorgesehene Absperrorgane mit der Wiegeeinrichtung über eine Regeleinrichtung in Verbindung.

Zweckmäßig sind die von den Förderdruckgefäßen zum Reaktordruckbehälter führenden Förderleitungen innenseitig mit einem hitzebeständigen Verschleißschutz und außenseitig mit einer Isolierung versehen.

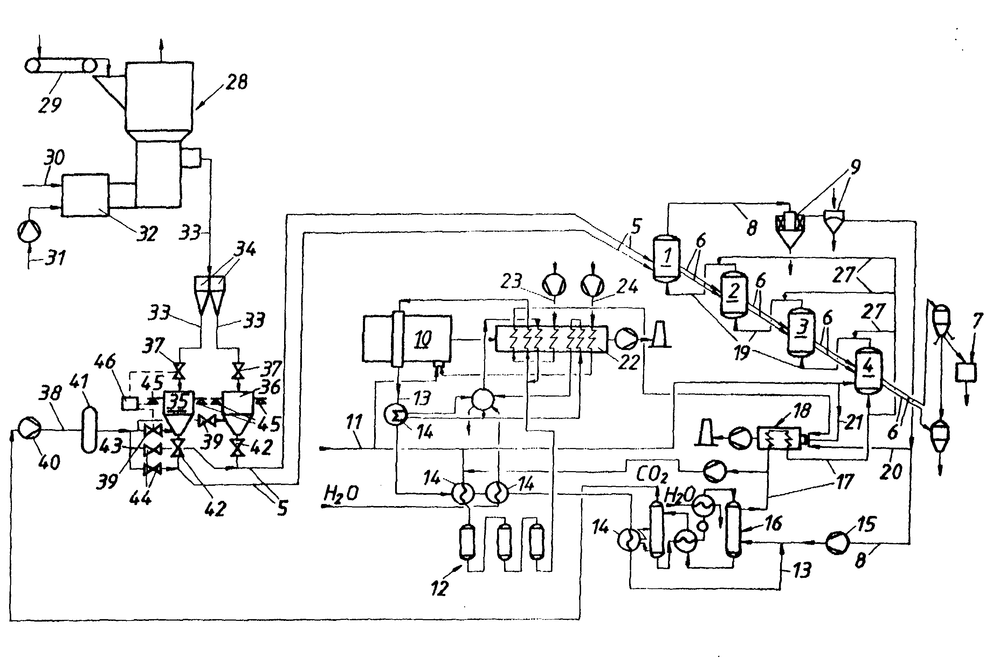

Die Erfindung ist nachfolgend anhand eines in der Zeichnung dargestellten Ausführungsbeispieles näher erläutert

Die erfindungsgemäße Anlage weist vier in Serie hintereinander geschaltete Reaktordruckbehälter, die als Wirbelschichtreaktoren 1 bis 4 ausgebildet sind, auf, wobei eisenoxidhältiges Material, wie Feinerz, über eine Förderleitung 5 dem ersten Wirbelschichtreaktor 1 und von Wirbelschichtreaktor zu Wirbelschichtreaktor über Förderleitungen 6 geleitet und das fertig reduzierte Material (Eisenschwamm) in einer Brikettieranlage 7 heiß- oder kaltbrikettiert wird. Erforderlichenfalls wird das reduzierte Eisen vor Reoxidation während der Brikettierung durch ein nicht dargestelltes Inertgas-System geschützt.

Reduktionsgas wird im Gegenstrom zum Erzdurchfluß von Wirbelschichtreaktor 4 zu Wirbelschichtreaktor 3 bis 1 geführt und als Topgas über eine Topgas-Ableitung 8 aus dem in Gasströmungsrichtung letzten Wirbelschichtreaktor 1 abgeleitet und in einem Naßwäscher 9 gekühlt und gewaschen. Die Herstellung des Reduktionsgases erfolgt durch Reformieren von über die Leitung 11 zugeführtem und in einer Entschwefelungsanlage 12 entschwefeltem Erdgas in einem Reformer 10. Das aus Erdgas und Dampf gebildete reformierte Gas besteht im wesentlichen aus H₂, CO, CH₄, H₂O und CO₂. Dieses reformierte Gas wird über die Reformgasleitung 13 mehreren Wärmetauschern 14 zugeleitet, in denen es auf Umgebungstemperatur abgekühlt wird, wodurch Wasser aus dem Gas auskondensiert wird.

Die Reformgasleitung 13 mündet in die Topgas-Ableitung 8, nachdem das Topgas mittels eines Kompressors 15 verdichtet wurde. Das so sich bildende Mischgas wird durch einen CO₂-Wäscher 16 hindurchgeschickt und von CO₂ befreit, und es steht nunmehr als Reduktionsgas zur Verfügung. Dieses Reduktionsgas wird über die Reduktionsgas-Zuleitung 17 in einem dem CO₂-Wäscher 16 nachgeordneten Gaserhitzer 18 auf eine Reduktionsgas-Temperatur von etwa 800°C erhitzt und dem in Gas-Durchflußrichtung ersten Wirbelschichtreaktor 4 zugeführt, wo es mit den Feinerzen zur Erzeugung von direkt reduziertem Eisen reagiert. Die Wirbelschichtreaktoren 4 bis 1 sind in Serie geschaltet; das Reduktionsgas gelangt über die Verbindungsleitungen 19 von Wirbelschichtreaktor zu Wirbelschichtreaktor.

Ein Teil des Topgases wird aus dem Gas-Kreislauf 8, 17, 19 ausgeschleust, um eine Anreicherung von Inertgasen, wie N₂, zu vermeiden. Das ausgeschleuste Topgas wird über eine Zweigleitung 20 dem Gaserhitzer 18 zur Erwärmung des Reduktionsgases zugeführt und dort verbrannt. Eventuell fehlende Energie wird durch Erdgas, welches über die Zuleitung 21 zugeführt wird, ergänzt.

Die fühlbare Wärme des aus dem Reformer 10 austretenden reformierten Gases sowie der Reformerrauchgase wird in einem Rekuperator 22 genutzt, um das Erdgas nach Durchlauf durch die Entschwefelungsanlage 12 vorzuwärmen, den für die Reformierung benötigten Dampf zu erzeugen sowie die dem Gaserhitzer 18 über die Leitung 23 zugeführte Verbrennungsluft sowie gegebenenfalls auch das Reduktionsgas vorzuwärmen. Die dem Reformer 10 über die Leitung 24 zugeführte Verbrennungsluft wird ebenfalls vorgewärmt.

Um in sämtlichen Wirbelschichtreaktoren 1 bis 4 die Reaktionstemperatur auf gleicher Höhe konstant zu halten und hierdurch eine weitere Senkung des Energiebedarfes zu erzielen, wird heißes und frisches Reduktionsgas den Wirbelschichtreaktoren 1 bis 3, die dem in Reduktionsgas-Strömungsrichtung ersten Wirbelschichtreaktor 4 nachgeordnet sind, über Zweigleitungen 27 direkt zugeführt, u.zw. in einer Menge von etwa 10 % je Wirbelschichtreaktor 1, 2 und 3. Die Wirbelschichtreaktoren 1 bis 4 sind somit hinsichtlich der Reduktionsgasführung nicht nur in Serie, sondern, was die Zuführung eines geringen Teiles des Reduktionsgases betrifft, auch parallel geschaltet, wogegen die Wirbelschichtreaktoren 1 bis 4, was die Ab- bzw. Weiterleitung des Reduktionsgases betrifft, beim dargestellten Ausführungsbeispiel ausschließlich in Serie geschaltet sind.

Vor Einleiten des Feinerzes in das erste, als Wirbelschichtreaktor ausgebildete Reaktordruckgefäß 1 wird das Feinerz einer Erzvorbereitung, wie einer Siebung und Trocknung, sowie zweckmäßig einer Vorwärmung unterzogen. Zur Trocknung ist ein Wirbelschichttrockner-Vorwärmer 28 vorgesehen, in dem das Feinerz nicht nur getrocknet, sondern auch auf 300 bis 700°C vorgewärmt wird. Diesem Wirbelschichttrockner-Vorwärmer 28 wird das Feinerz über ein Förderband 29 und das Heizgas 30 mit Luft 31 über einen Brenner 32 zugeführt Das heiße Feinerz wird über eine Erzzuführleitung 33 einem Zwischenbehälter 34 zugeleitet und gelangt von dort in zwei Förderdruckgefäße 35, 36, u.zw. über Ventile 37 wahlweise jeweils in eines von beiden. Die Förderdruckgefäße 35, 36 sind jeweils leitungsmäßig mit einer CO₂-Druckgasleitung 38 über Ventile 39 verbindbar, wobei in der CO₂-Druckgasleitung 38 ein Verdichter 40, der das CO₂ auf etwa 20 bar verdichtet, und diesem nachfolgend ein Ausgleichsbehälter 41 vorgesehen sind. Der Ausgleichsbehälter gleicht kurzzeitige Druckschwankungen aus, die bei der abwechselnden Entnahme des CO₂ entstehen.

Wie aus der Zeichnung ersichtlich, wird das CO₂-Fördergas dem Reduktionsprozeß entnommen, u.zw. dem CO₂-Wäscher 16, so daß es im Prozeß im Kreislauf geführt ist.

Von jedem der beiden Förderdruckgefäße 35, 36 geht eine Förderleitung 5 aus, die einzeln mit dem ersten Reaktordruckbehälter 1 leitungsmäßig über Ventile 42 verbindbar sind.

Die vom Ausgleichsbehälter 41 ausgehende CO₂-Druckgasleitung 38 weist eine Verzweigung 43 auf, so daß sie über Ventile 44 leitungsmäßig mit jeweils einer Förderleitung 5 zur Förderung des Feinerzes in den ersten Reaktordruckbehälter 1 in Verbindung bringbar ist Jedes der Förderdruckgefäße 35, 36 ruht auf Wiegezellen 45 einer Wiegeeinrichtung, die mit den Ventilen 39, 44 der Druckgasleitung sowie den Ventilen 37 und 42 in der Erzzuführleitung 33 bzw. Förderleitung 5 über eine Regeleinrichtung 46 in Verbindung steht, wie dies für einige der Ventile mit strichlierten Linien angedeutet ist.

Die Funktion der Chargieranlage ist folgende:

Das heiße Erz wird in eines der beiden Förderdruckgefäße 35, 36 chargiert, bis die Wiegeeinrichtung 45, 46 die vollständige Füllung dieses Druckgefäßes anzeigt Sodann wird die Erzzuführleitung 33 durch Schließen des zugehörigen Ventiles 37 geschlossen und das chargierte Förderdruckgefäß mit auf 50 bis 200°C vorgewärmtem CO₂ durch Öffnen des zugehörigen Ventiles 39 auf Förderdruck gebracht. Sobald der Förderdruck - der bei etwa 20 bar liegt - erreicht ist, wird die zugehörige Förderleitung 5 zum Reaktordruckbehälter 1 geöffnet und das Feinerz mit gemäßigter Geschwindigkeit in den Reaktordruckbehälter 1 eingetragen.

In der Zwischenzeit wird das zweite Förderdruckgefäß 35, 36 mit Feinerz gefüllt, so daß es nach Leerung des ersten Förderdruckgefäßes 35, 36 zum Chargieren von Feinerz zur Verfügung steht Infolge der gemäßigten Chargierung einmal aus dem einen und einmal aus dem anderen Förderdruckgefäß 35, 36 gelingt es, Feinerz kontinuierlich in stets gleichbleibender Menge pro Zeiteinheit dem Reaktordruckgefäß 1 zuzuführen. Es liegt auf der Hand, daß dies auch mit mehr als zwei Förderdruckgefäßen 35, 36 erzielbar ist.

Die zum Reaktordruckbehälter 1 geführte Förderleitung 5 ist innen mit einem hitzebeständigen Verschleißschutz und außen mit einer Isolierung ausgerüstet Zur Vermeidung von Wärmeverlusten sind die Förderdruckgefäße 35, 36 ebenfalls wärmeisoliert. Weiters sind auch Einrichtungen zur Aufnahme von Wärmedehnungen vorgesehen. Zur Erhöhung der Betriebssicherheit können auch zwei voneinander unabhängige Druckeintragsysteme installiert sein.

CO₂ hat sich insbesondere deswegen als Fördergas als vorteilhaft erwiesen, da es die Reduktionsgasatmosphäre in den Reaktordruckbehältern nicht stört, weil es aus dem Prozeß in einfacher Weise entnommen werden kann und weil es nicht brennbar ist.

Der spezifische Verbrauch an Fördergas beträgt 20 bis 35 Nm³ CO₂ je t Eisenerz. Der Gesamtverbrauch beträgt bei 120 t/h Förderleistung maximal 4200 Nm³/h. Im Reduktionsgas ist bei Anwendung des erfindungsgemäßen Chargierverfahrens CO₂ in einer nicht störenden Menge von etwa 2 % vorhanden. Es können aber auch andere im Prozeß vorkommende Gase als Fördergas eingesetzt werden.

Die erfindungsgemäß erzielten Vorteile lassen sich wie folgt zusammenfassen:
- hohe Wirtschaftlichkeit infolge der kontinuierlichen Verfahrensweise,
- bessere Ausnutzung der Reaktoren und hierdurch Erzielung einer hohen Durchsatzleistung,
- vereinfachte Betriebsweise durch wesentlich weniger Schaltungen,
- geringer Aufwand an Ausrüstungen gegenüber den herkömmlichen Systemen,
- geringe Bauhöhe des Reaktorgebäudes, da der Eintrag vom Hüttenflur aus erfolgt,
- weniger Aufwand an Stahlkonstruktion,
- durch die drucklos erfolgte Vorwärmung des Erzes kein Aufwand zum Verdichten der hierzu erforderlichen Verbrennungsluft,
- Einsatz eines im Prozeß vorhandenen Gases als Fördergas,
- durch den Einsatz des im Prozeß anfallenden Fördergases keine Beeinflussung des Reduktionsprozesses und
- in Verbindung mit der vorgeschalteten Wirbelschichttrocknung mit anschließender Vorwärmung sehr günstiger energietechnischer Wirkungsgrad.

Mit dem erfindungsgemäßen Chargierverfahren und der erfindungsgemäßen Anlage hierzu läßt sich auch kaltes Erz chargieren.

Das erfindungsgemäße Verfahren und die erfindungsgemäße Anlage lassen sich nicht nur für das oben beschriebene Reduktionsverfahren, bei dem das Reduktionsgas weitgehend im Kreislauf gerührt wird, einsetzen, sondern auch für andere Reduktionsverfahren, beispielsweise solche, bei denen das Reduktionsgas nur einmal den Reaktordruckbehälter durchströmt

## Patentansprüche

1. Verfahren zum Chargieren von feinkörnigem Erz, insbesondere Eisenerz, in einen von Prozeßgas durchströmten Reaktordruckbehälter (1), wobei das Erz zunächst in ein Förderdruckgefäß (35, 36) eingebracht, in diesem mittels eines Druckgases unter Druck gesetzt und anschließend über eine Förderleitung (5) mittels des Druckgases in den Reaktordruckbehälter (1) gefördert wird, **dadurch gekennzeichnet, daß** ein Teil des Erzes in mindestens ein weiteres Förderdruckgefäß (35, 36) eingebracht und in diesem ebenfalls mittels eines Druckgases unter Druck gesetzt wird, und daß die Chargierung des Erzes in den Reaktordruckbehälter (1) kontinuierlich erfolgt, u.zw. durch alternierende Förderung einmal aus dem einen und anschließend aus dem weiteren Förderdruckgefäß (35, 36), wobei das Druckgas als mengenmäßiger oder bestandteilmäßiger Teil des Prozeßgases diesem entnommen und mit dem Erz diesem wieder zugeführt wird.

2. Verfahren nach Anspruch 1, **dadurch gekennzeichnet, daß** das Prozeßgas zumindest teilweise unter Einschluß des Reaktordruckbehälters (1) in einem Kreislauf geführt ist

3. Verfahren nach Anspruch 1 oder 2, **dadurch gekennzeichnet, daß** als Druckgas CO₂ verwendet wird, welches dem Prozeßgas des im Reaktordruckbehälter (1) stattfindenden Prozesses mittels einer CO₂-Wäsche entnommen wird.

4. Verfahren nach Anspruch 1 oder 2, **dadurch gekennzeichnet, daß** ein zur Reduktion des Erzes dienendes Reduktionsgas als Druckgas zur Förderung des Erzes aus den Förderdruckgefäßen (35, 36) in den Reaktordruckbehälter (1) verwendet wird.

5. Verfahren nach einem oder mehreren der Ansprüche 1 bis 4, **dadurch gekennzeichnet, daß** das Druckgas auf einen Druck von bis zu 20 bar vorgespannt und unter Ausgleich vorhandener Druckschwankungen in die Förderdruckgefäße (35, 36) eingeleitet wird.

6. Verfahren nach einem oder mehreren der Ansprüche 1 bis 5, **dadurch gekennzeichnet, daß** die Förderdruckgefäße (35, 36) kontinuierlich gewogen werden und die alternative Förderung aus einem Förderdruckgefäß (35, 36) bzw. die Füllung eines Förderdruckgefäßes (35, 36) über einen Regelkreis (46) in Abhängigkeit des gemessenen Gewichtes der Förderdruckgefäße (35, 36) vorgenommen wird.

7. Verfahren nach einem oder mehreren der Ansprüche 1 bis 6, **dadurch gekennzeichnet, daß** das Erz im heißen Zustand chargiert wird.

8. Anlage zur Durchführung des Verfahrens nach einem oder mehreren der Ansprüche 1 bis 7, mit einem Trockner und Vorwärmer (28) für das Erz, einem diesem über eine Erzzuführleitung (33) nachgeordneten Förderdruckgefäß (35, 36), in das eine Druckgasleitung (38) mündet, von dem eine Förderleitung (5) ausgeht und in den Reaktordruckbehälter (1) mündet, **dadurch gekennzeichnet, daß** mindestens ein weiteres Förderdruckgefäß (35, 36) vorhanden ist, wobei die Erzzuführleitung (33) mittels Absperrorgane (37) alternativ mit dem einen oder mit dem weiteren Förderdruckgefäß (35, 36) in leitungsmäßige Verbindung bringbar ist, daß jedes der Förderdruckgefäße (35, 36) mit einer Förderleitung (5) mit dem Reaktordruckbehälter (1) in Verbindung bringbar ist und daß eine Druckgasleitung (38) alternativ mit jedem der Förderdruckgefäße (35, 36) mittels Absperrorgane (39) in leitungsmäßige Verbindung bringbar ist, wobei die Druckgasleitung (38) mit dem Reaktordruckbehälter (1) über die Förderdruckgefäße (35, 36) und die Förderleitungen (5) einen Kreislauf bildend in leitungsmäßiger Verbindung steht

9. Anlage nach Anspruch 8, **dadurch gekennzeichnet, daß** die Druckgasleitung (38) zusätzlich mittels Absperrorgane (44) alternativ mit jeder der von den Förderdruckgefäßen (35, 36) in den Reaktordruckbehälter (1) führenden Förderleitungen (5) in leitungsmäßige Verbindung bringbar ist.

10. Anlage nach Anspruch 8 oder 9, **dadurch gekennzeichnet, daß** in der Druckgasleitung (38) ein Verdichter (40) und ein Druckschwankungen ausgleichender Ausgleichsbehälter (41) vorgesehen sind.

11. Anlage nach einem oder mehreren der Ansprüche 8 bis 10, **dadurch gekennzeichnet, daß** die Förderdruckgefäße (35, 36) mit einer Wiegeeinrichtung (45) versehen sind und in der Druckgasleitung (38) vorhandene sowie in der Erzzuführleitung (33) vorgesehene Absperrorgane (37, 39) mit der Wiegeeinrichtung (45) über eine Regeleinrichtung (46) in Verbindung stehen.

12. Anlage nach einem oder mehreren der Ansprüche 8 bis 11, **dadurch gekennzeichnet, daß** die von den Förderdruckgefäßen (35, 36) zum Reaktordruckbehälter (1) führenden Förderleitungen (5) innenseitig mit einem hitzebeständigen Verschleißschutz und außenseitig mit einer Isolierung versehen sind.

## Claims

1. A process for charging fine-grained ore, in particular iron ore, into a reactor pressure vessel (1) perfused by process gas, wherein the ore is firstly introduced into a conveying-pressure vessel (35, 36), is pressurized in the latter by means of a pressure gas and is subsequently conveyed into the reactor pressure vessel (1) via a conveying line (5) by means of the pressure gas, **characterised in that** some of the ore is introduced into at least one further conveying-pressure vessel (35, 36) and is likewise pressurized in the latter by means of a pressure gas, and **in that** charging of the ore into the reactor pressure vessel (1) is effected continuously, specifically by alternating conveying, first out of the one conveying-pressure vessel (35, 36) and subsequently out of the further conveying-pressure vessel (35, 36), the pressure gas being withdrawn, as a quantitative or constitutional part of the process gas, from said process gas and supplied to it again together with the ore.

2. Process according to Claim 1, **characterised in that** the process gas is conducted at least partially in a circuit including the reactor pressure vessel (1).

3. Process according to Claim 1 or 2, **characterised in that** use is made of CO₂ by way of pressure gas which is withdrawn by means of a CO₂ scrubbing from the process gas of the process taking place in the reactor pressure vessel (1).

4. Process according to Claim 1 or 2, **characterised in that** a reducing gas serving for reduction of the ore is used by way of pressure gas for conveying the ore out of the conveying-pressure vessels (35, 36) into the reactor pressure vessel (1).

5. Process according to one or more of Claims 1 to 4, **characterised in that** the pressure gas is pressurized to a pressure of up to 20 bar and introduced into the conveying-pressure vessels (35, 36), with compensation for existing fluctuations in pressure.

6. Process according to one or more of Claims 1 to 5, **characterised in that** the conveying-pressure vessels (35, 36) are continuously weighed and the alternative conveying out of a conveying-pressure vessel (35, 36) or the filling of a conveying-pressure vessel (35, 36) is undertaken via a control loop (46) as a function of the measured weight of the conveying-pressure vessels (35, 36).

7. Process according to one or more of Claims 1 to 6, **characterised in that** the ore is charged in the hot state.

8. A plant for implementing the process according to one or more of Claims 1 to 7, with a drier and preheater (28) for the ore, a conveying-pressure vessel (35, 36) arranged downstream of said drier and preheater via an ore supply line (33), into which conveying-pressure vessel a pressure-gas line (38) leads, from which conveying-pressure vessel a conveying line (5) emanates and leads into the reactor pressure vessel (1), **characterised in that** at least one further conveying-pressure vessel (35, 36) is present, the ore supply line (33) being capable of being brought into line-mediated connection by means of shut-off devices (37) alternatively with the one conveying-pressure vessel (35, 36) or with the other conveying-pressure vessel (35, 36), **in that** each of the conveying-pressure vessels (35, 36) is capable of being brought into connection with the reactor pressure vessel (1) by a conveying line (5) and **in that** a pressure-gas line (38) is capable of being brought into line-mediated connection alternatively with each of the conveying-pressure vessels (35, 36) by means of shut-off devices (39), the pressure-gas line (38) being in line-mediated connection, forming a circuit, with the reactor pressure vessel (1) via the conveying-pressure vessels (35, 36) and the conveying lines (5).

9. Plant according to Claim 8, **characterised in that** by means of shut-off devices (44) the pressure-gas line (38) is additionally capable of being brought into line-mediated connection alternatively with each of the conveying lines (5) leading from the conveying-pressure vessels (35, 36) into the reaction pressure vessel (1).

10. Plant according to Claim 8 or 9, **characterised in that** a compressor (40) and a compensating tank (41) compensating for fluctuations in pressure are provided in the pressure-gas line (38).

11. Plant according to one or more of Claims 8 to 10, **characterised in that** the conveying-pressure vessels (35, 36) are provided with a weighing device (45), and shut-off devices (37, 39) which are present in the pressure-gas line (38) and which are also provided in the ore supply line (33) are connected to the weighing device (45) via a control device (46).

12. Plant according to one or more of Claims 8 to 11, **characterised in that** the conveying lines (5) leading from the conveying-pressure vessels (35, 36) to the reactor pressure vessel (1) are provided with a heat-resistant protection against wear on the inside and with an insulation on the outside.

## Revendications

1. Procédé pour charger du fer à grains fins, notamment du minerai de fer, dans un caisson sous pression de réacteur (1), traversé par un gaz de traitement, selon lequel le minerai est introduit tout d'abord dans un récipient sous pression de convoyage (35, 36), est placé sous pression dans un récipient au moyen d'un gaz sous pression et est ensuite convoyé par l'intermédiaire d'une conduite de convoyage (5) à l'aide du gaz sous pression pour être amené dans le caisson sous pression (1) du réacteur, **caractérisé en ce qu'**une partie du minerai est introduite dans au moins un autre récipient sous pression de convoyage (35, 36) et est placé sous pression dans ce dernier également au moyen d'un gaz sous pression et que le chargement du minerai dans le caisson sous pression (1) du réacteur s'effectue continûment, à savoir au moyen d'un convoyage alterné une fois depuis le récipient sous pression de convoyage et ensuite à partir de l'autre récipient sous pression de convoyage (35, 36), le gaz sous pression étant prélevé du gaz de traitement sous la forme d'une partie quantitative et constitutive du gaz de traitement et étant envoyé à nouveau avec le minerai, à ce gaz.

2. Procédé selon la revendication 1, **caractérisé en ce que** le gaz de traitement circule au moins en partie moyennant l'inclusion du caisson sous pression (1) du récipient, dans un circuit.

3. Procédé selon la revendication 1 ou 2, **caractérisé en ce qu'**on utilise, comme gaz sous pression, du CO₂, qui est prélevé du gaz de traitement utilisé dans le traitement qui s'effectue dans le caisson sous pression (1) du réacteur, à l'aide d'une unité de lavage de CO₂.

4. Procédé selon la revendication 1 ou 2, **caractérisé en ce qu'**on utilise un gaz réducteur utilisé pour la réduction du minerai, en tant que gaz sous pression pour convoyer le minerai depuis les récipients sous pression de convoyage (35, 36) pour leur envoi au caisson sous pression (1) du réacteur.

5. Procédé selon l'une ou plusieurs des revendications 1 à 4, **caractérisé en ce que** le gaz sous pression est préimprimé à une pression atteignant jusqu'à 20 bars et est introduit dans les récipients sous pression de convoyage (35, 36), moyennant une compensation de variations de pression existantes.

6. Procédé selon une ou plusieurs des revendications 1 à 5, **caractérisé en ce que** les récipients sous pression de convoyage (35, 36) sont pesés continûment et l'autre convoyage à partir d'un récipient sous pression de convoyage (35, 36) ou le remplissage d'un récipient sous pression de convoyage (35, 36) par l'intermédiaire d'un circuit de régulation (46) est réalisé en fonction du poids mesuré des récipients sous pression de convoyage (35, 36).

7. Procédé selon une ou plusieurs des revendications 1 à 6, **caractérisé en ce que** le minerai est chargé à l'état chaud.

8. Installation pour la mise en oeuvre du procédé selon une ou plusieurs des revendications 1 à 7, comportant une unité de séchage et une unité de préchauffage (28) pour le minerai, et un récipient sous pression de convoyage (35, 36) installé en aval de cette unité moyennant l'utilisation d'une conduite (33) d'amenée du minerai et dans lequel débouche une conduite de gaz sous pression (38), et d'où part une conduite de convoyage (5), qui débouche dans le caisson sous pression (1) du réacteur, **caractérisé en ce qu'**au moins un autre récipient sous pression de convoyage (35, 36) est prévu, la conduite (33) d'amenée du minerai pouvant être reliée, au moyen d'une conduite, alternativement avec un ou avec l'autre récipient sous pression de convoyage (35, 36), que chaque récipient sous pression de convoyage (35, 36) peut être relié au caisson sous pression (1) du réacteur au moyen d'une conduite de convoyage (5) et qu'une conduite de gaz sous pression (38) peut être reliée alternativement, par une conduite, à chacun des récipients sous pression de convoyage (35, 36) à l'aide d'organes de sectionnement (39), la conduite de gaz sous pression (38) étant reliée par une conduite, en formant un circuit, au caisson sous pression (1) du réacteur par l'intermédiaire des récipients sous pression de convoyage (35, 36) et des conduites de convoyage (5).

9. Installation selon la revendication 8, **caractérisée en ce que** la conduite de gaz sous pression (38) peut être en outre reliée par une conduite, au moyen d'organes de sectionnement (44) alternativement à chacune des conduites de convoyage (5) qui relient les récipients sous pression de convoyage (35, 36) au caisson sous pression (1) du réacteur.

10. Installation selon la revendication 8 ou 9, **caractérisée en ce qu'**un compresseur (15) et un récipient de compensation (41), qui compense des variations de pression, sont prévus dans la conduite de gaz sous pression (38).

11. Installation selon une ou plusieurs des revendications 8 à 10, **caractérisée en ce que** le récipient sous pression de convoyage (35, 36) sont équipés d'un dispositif de pesée (45) et que des organes de sectionnement (37, 39), qui sont présents dans la conduite de gaz sous pression (38) et sont prévus dans la conduite (33) d'amenée du minerai sont reliés au dispositif de pesée (45) au moyen d'un dispositif de régulation (46).

12. Installation selon une ou plusieurs des revendications 8 à 11, **caractérisée en ce que** les conduites de convoyage (5), qui relient les récipients sous pression de convoyage (35, 36) au caisson sous pression (1) du réservoir, comportent côté intérieur un système thermorésistant de protection contre l'usure et, côté extérieur, un isolant.
